# EUROPEAN PATENT SPECIFICATION

(11) **EP 1 980 777 B1**
(45) Date of publication and mention of the grant of the patent: **03.08.2011**
(21) Application number: 08154353.0
(22) Date of filing: 10.04.2008
(51) Int. Cl.: F16K 37/00

(54) **Hydraulic control valve with stroke transducer**
Hydraulischer Verteiler mit Taktwandler
Distributeur hydraulique avec transducteur de temps

(30) Priority: 11.04.2007 IT PR20070024
(43) Date of publication of application: 15.10.2008
(73) Proprietor: Walvoil S.p.A., 42100 Reggio nell'Emilia (IT)
(72) Inventor: Barbieri, Massimiliano, 42100 Reggio Emilia (IT); Venturi, Luca, 42100 Reggio Emilia (IT)
(74) Representative: Leone, Mario

(56) References cited:
- FR-A1- 2 847 985
- US-A- 6 152 172

## Description

The present invention relates to the art of control valves for hydraulic control of mobile machinery and particularly to control valves having a spool position sensing system or stroke transducer.

Stroke transducers can determine the position of the spool sliding within the hydraulic control valve by integrated electronic components designed to sense the presence of a magnetic field; suitable electronic signal conditioning circuits within the transducer provide the spool position information to the output contacts.

The integrated electronic components for magnetic field sensing can provide information in various modes:
- Continuous output, i.e. proportional to the sensed magnetic field;
- Discrete output, i.e. with two output values only: a first value, if the intensity of the sensed magnetic field is lower than a predetermined threshold; a second value if the sensed magnetic field in higher than the predetermined threshold.

The integrated electronic components having a continuous output operation are used in applications that require timely spool position information.

The integrated electronic components having a discrete output operation are used in applications that only require little information about the control valve state; particularly, the relevant states of the control valve can be summarized as follows: "valve actuated toward the right" "valve actuated towards the left" and "valve not actuated/in central position".

US patent 6,152,172 provides an example of a control valve having a spool position sensing system with an integrated electronic component, particularly a Hall effect sensor, which produces an output signal proportional to the spool position. Spool position sensing systems like the one disclosed in US patent 6,152,172 are usually mounted to mobile vehicles and are thence exposed to polarity reversals, short-circuits current and power peaks, which threaten their safety and integrity.

Therefore, a first object of the present invention is to provide a stroke transducer having an integrated power and protection system.

A second drawback of the solution as disclosed in US patent 6,152,172 is that any damage occurring to the Hall effect sensor that is designed to sense the magnetic field, affects the capability of determining the position of the spool within the control valve.

Thus, a second object of the present invention is to provide a simple and highly reliable stroke transducer which uses twin electronic components for magnetic field sensing, and can provide a dual output signal. A further drawback of the prior art is that the installation of a spool position sensing system on the control valve often requires changes to be made to the components of the control valve itself.

Yet another object of the present invention is to provide a stroke transducer that can be mounted to any type of control valve without requiring any change to the existing components and that can provide various output types.

Unlike prior art stroke transducers, the stroke transducer of the present invention can provide various types of output signals (such as continuous voltage or digital output, discrete output), depending on the integrated electronic components mounted therein, without making any change to its construction architecture.

FR 2 847 985 relates to a speed sensor for a moving member, which sensor is suitable in particular for use in engine valves for measuring the travel speed of the valves and/or of moving members for actuating said valves, more particularly for valves that are actuated by electromagnetic means. Document describes a magnetic flux variation which induces a voltage variation in coils that is proportional to the travel speed of a ferromagnetic insert, and thus to the travel speed of the moving member.

Notwithstanding FR 2 847 985 discloses an integration techniques which can be used for obtaining the positions of the moving member on the basis of the speed measurements provided by the sensor, the first difference between the present invention and the aforesaid document is that the latter directly measures the speed of a moving member while the present invention directly determines the position of the spool which slides within the hydraulic control valve.

These objects and advantages are achieved by the stroke transducer of the present invention, which is characterized by the content of the annexed claims.

This and other features will be more apparent from the following description of a few embodiments, which are shown by way of example and without limitation in the accompanying drawings, in which:
- Fig. 1 is a sectional view of the stroke transducer of the present invention;
- Fig. 2a is a sectional view of the stroke transducer of the present invention, with the spool actuated towards the left;

- Fig. 2b is a sectional view of the stroke transducer of the present invention, with the spool in a neutral position;
- Fig. 2c is a sectional view of the stroke transducer of the present invention, with the spool actuated towards the right;
- Fig. 3 is an axonometric view of the sensor body that is mounted within the stroke transducer of the present invention;
- Fig. 4 shows the diagram of the electronic circuit contained in the sensor body that is mounted within the stroke transducer of the present invention;
- Fig. 5 shows the output signals from the integrated electronic components of the stroke transducer, in the configuration in which the integrated electronic components are of the discrete output type;
- Fig. 6 shows the output signal from the integrated electronic components of the stroke transducer, in the configuration in which the integrated electronic components are of the continuous output type.

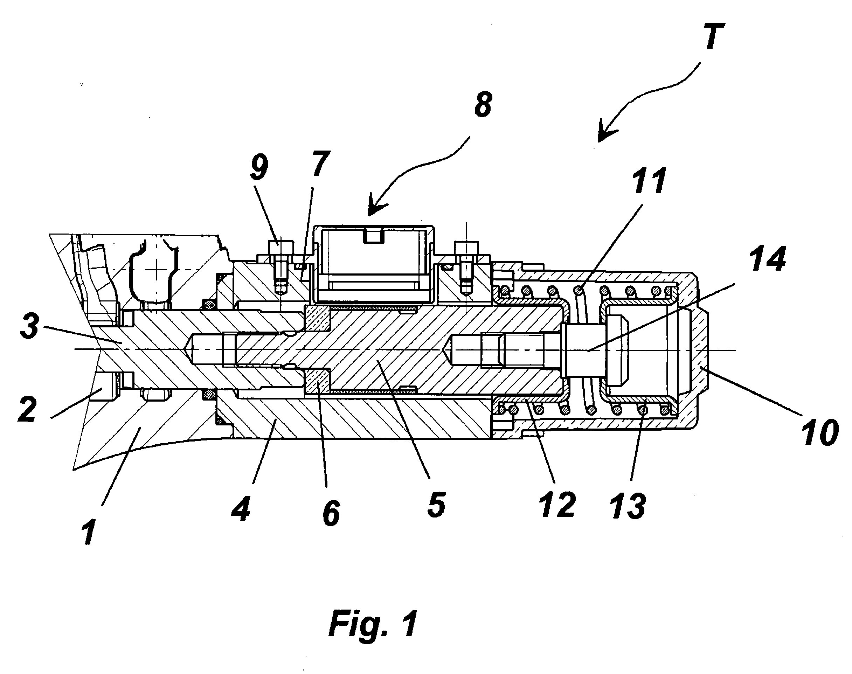

With reference to Fig. 1, we describe, in the following, the construction architecture of the stroke transducer object of the present invention.

The control valve is composed of a body 1 with a bore 2 formed therein; a spool 3 is received in that bore and is designed to be actuated for axially sliding and directing the hydraulic fluid flow to the various points of use.

The spool 3 can be actuated mechanically (such as by a lever connected to one of the spool ends, not shown) or electrically (such as by the action of a solenoid, not shown).

The assembly of the stroke transducer T is composed of a flange 4, a pin 5, a permanent magnet 6 and a sensor body 8.

The flange 4 is fixed to the control valve body 1 at the opening of the bore that receives the spool 3; the sensor body 8 is held within the upper portion of the flange 4.

The pin 5 is in turn received within the hollow flange 4 and is allowed to move integrally with the spool 3 thanks to a threaded end thereof, to be screwed onto the spool.

The permanent magnet 6 is interposed between the end of the spool 3 and the pin 5; this magnet has a tubular shape and its magnetic axis is perpendicular to the direction of translation of the spool 3.

The cap 10 is attached to the flange 4 and holds a system composed of a spring 11, and bushings 12 and 13 therein; this system is fastened to the pin 5 by the bolt 14.

An assembly is thus composed of the cap 10, the spring 11, the bushings 12 and 13 and the bolt 14; such assembly is sometimes referred to as "version".

The permanent magnet 6 may be installed without making any change to the components that form this assembly; this provides a considerable advantage in that it allows the sensor to be mounted to any desired control valve, regardless of the assembly to be mounted thereto and without requiring the creation of special components.

The sensor body 8 is mounted to the flange 4 and is particularly held integral therewith by screws 9. The use of two screws to fasten the sensor body 8 to the flange 4 allows easy removal and replacement thereof in case of damages.

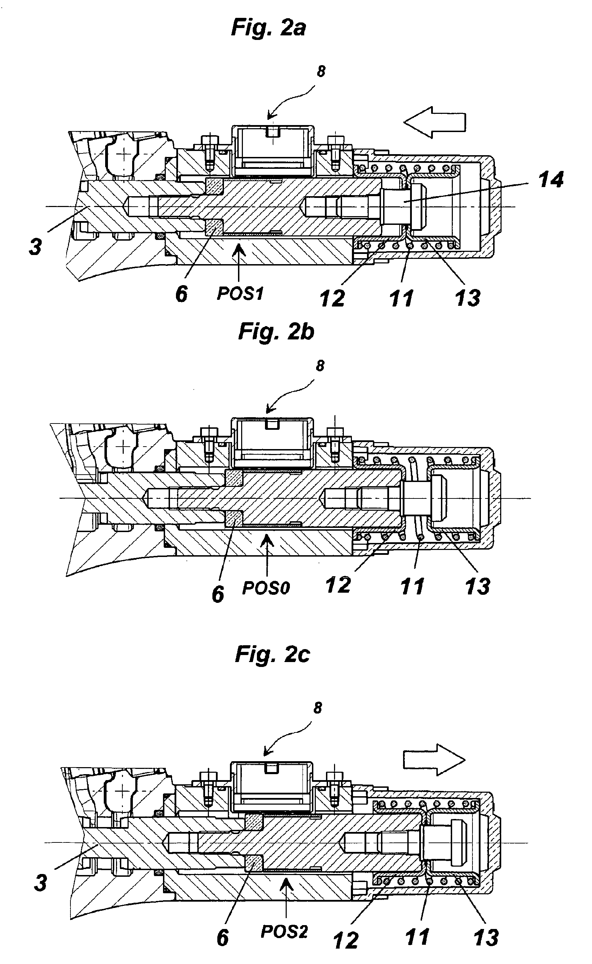

In the neutral position POSO as shown in Fig. 2b, the permanent magnet 6 and the sensor body 8 are aligned with each other.

When the spool 3 is actuated towards the right, as shown in Fig. 2c, then the permanent magnet 6 is accordingly displaced to POS2 towards the right relative to the sensor body 8.

When the spool 3 is actuated towards the left, as shown in Fig. 2a, then the permanent magnet 6 is accordingly displaced to POS2 towards the left relative to the sensor body 8.

In both right- and left-directed actuation cases, as the actuation force is released, the spring 11 expands to move back the permanent magnet 6 in line with the sensor body 8.

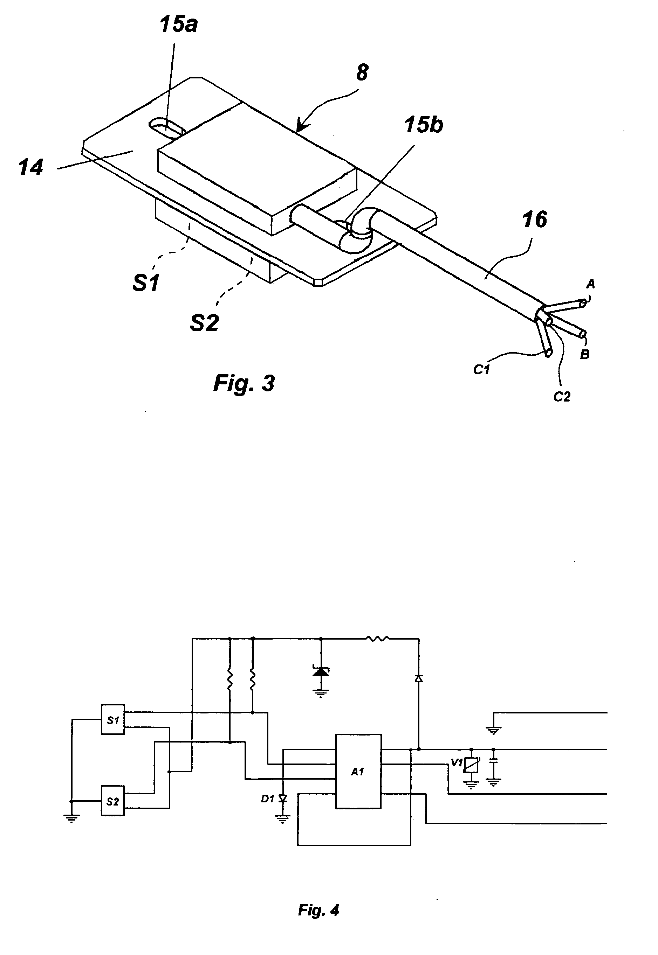

Referring to Fig. 3, there is shown the architecture of the sensor body 8.

The sensor body 8 is composed of a housing 14 with two slots 15A and 15B formed therein; as the sensor body 8 is attached to the flange 4, the two slots 15A and 15B allow the sensor body 8 to be displaced until the median position of the permanent magnet 6, also known as mechanical zero. Once this alignment condition has been reached, the sensor body 8 can be fastened to the flange 4 by the screws 9.

Two integrated electronic components S1 and S2 are situated within the housing 14 of the sensor body 8, to sense the position of the permanent magnet 6 via two opposite signals; the mechanical zero position corresponds to the condition in which the two output signals from S1 and S2 are equivalent.

The distance between the integrated electronic components S1 and S2 is smaller than the distance between the ends of the permanent magnet 6 whose position is sensed.

These integrated electronic components S1 and S2 are connected by the wires A (DC voltage VDC = 8 - 32V), and B (ground voltage), to a power source.

The integrated component S1 has its output connected to the wire C1, whereas the integrated component S2 has its output connected to the wire C2: if S1 and S2 are of the discrete output type, then they will impose a DC voltage VDC or a ground voltage to the wires C1 and C2 respectively, and if S1 and S2 are of the continuous output type, then they will impose a voltage proportional to the displacement of the permanent magnet 6 to the wires C1 and C2.

The wires A, B, C1 and C2 are insulated by a sheath and contained in a plastic tube 16.

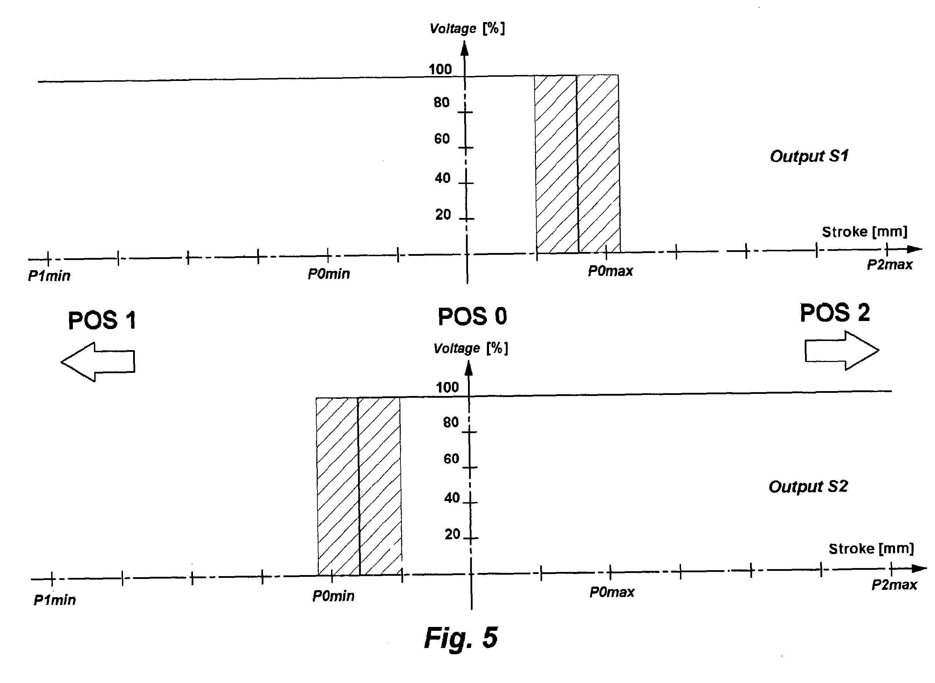

Fig. 5 diagrammatically shows the output signal from the integrated components S1 and S2 in the configuration in which both are of the discrete output type:
- Permanent magnet 6 in the neutral position (POmin-POmax stroke in Figs. 5a and 5b): the integrated electronic components S1 and S2 are above the permanent magnet 6 and both can sense a magnetic field above the predetermined threshold; therefore the VDC voltage is imposed to both wires C1 and C2.
- Permanent magnet 6 in the left-directed actuation position (P1min-P0min stroke in Figs. 5a and 5b): only the integrated electronic component S2 is placed above the permanent magnet 6 and can detect a magnetic field above the predetermined threshold. Therefore, the integrated component S2 imposes the VDC voltage to the wire C2, whereas the integrated component S1 imposes the ground potential to the wire C1.
- Permanent magnet 6 in the right-directed actuation position (P0max-P2max stroke in Figs. 5a and 5b): only the integrated electronic component S1 is placed above the permanent magnet 6 and can detect a magnetic field above the predetermined threshold. Therefore, the integrated electronic component S1 imposes the VDC voltage to the wire C1, whereas the integrated component S2 imposes the ground potential to the wire C2.

In the configuration with S1 and S2 having a discrete output operation, the stroke transducer T can withstand currents typical of solenoids or small motors.

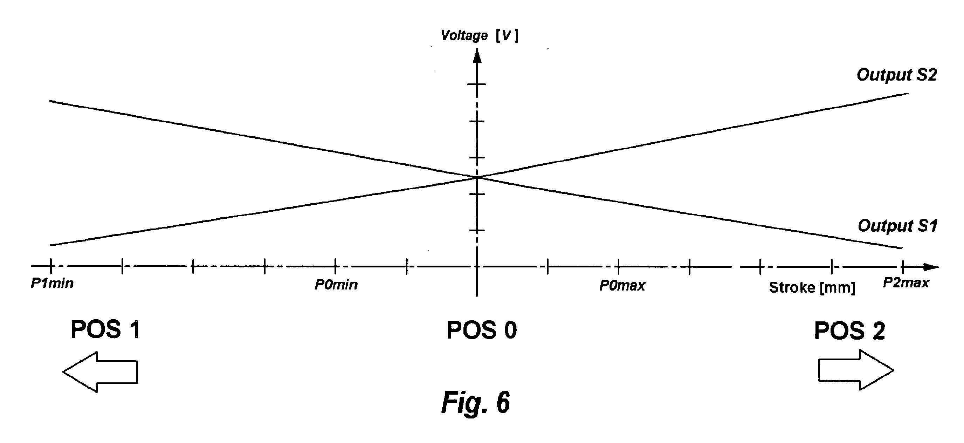

Figure 6 shows the curve of the output signal from the integrated electronic components S1 and S2 in the configuration in which both are of the continuous output type.

In this configuration, the two integrated electronic components S1 and S2 provide two opposite output signals, both proportional to the position of the permanent magnet 6 and the spool 3; output signal redundancy increases transducer operation safety because, even in case of failure of one of the two integrated components, the position of the permanent magnet 6 will be safely sensed.

In this configuration, the stroke transducer T may be configured to provide various output types:
- Voltage output in a range from 0.5 to 4.5 V
- Voltage output in a range from 25% to 75% of the power voltage
- Digital voltage via CAN bus protocol

Referring to Figure 4, there is shown the diagram of the electronic circuit contained in the sensor body 8.

In addition to the above described integrated components S1 and S2, this circuit also incorporates an amplifier A1, a diode D1 that protects it against polarity reversals and a varistor V1 for protection against voltage peaks.

In short, the hydraulic control valve is equipped with a stroke transducer T that can detect the position of the spool 3 by reading the magnetic field generated by a permanent magnet 6 integral with the spool 3 via the sensor body 8.

Such magnet 6 is interposed between the end of the spool 3 and the pin 5, it has a tubular shape and its magnetic axis is perpendicular to the direction of translation of the spool 3.

Such sensor body 8 incorporates two integrated electronic components S1 and S2 that can sense the motion of the permanent magnet 6 using two opposite signals: when the two output signals from S1 and S2 are equivalent, the magnet 6 and thence the spool 3 are in the mechanical zero position.

According to the types of integrated electronic components S1 and S2 that are mounted into the sensor body 8, the transducer T provides different output types:
- a discrete output that provides information about the three states of the valve, i.e. "central position", "actuated towards the right", "actuated towards the left"
- a continuous output, varying proportional to the whole stroke of the permanent magnet 6.

The dual output signal from the integrated electronic components S1 and S2 allows easy sensing of the median position of the permanent magnet 6, i.e. the position in which the two output signals from S1 and S2 are equivalent, and further allows sensor integrity to be checked.

The stroke transducer T mounted to the hydraulic control valve has a power and protection system integrated therein.

## Claims

1. A hydraulic control valve, comprising at least one body (1) within which one bore (2) receives an axially sliding spool (3) and having a stroke transducer (T) comprising means (6, 8) for sensing the position of said spool (3) by reading the magnetic field generated by a permanent magnet (6) integral therewith using a sensor body (8) incorporating an integrated power and protection system and two integrated electronic components (S1) and (S2) that can sense the motion of the permanent magnet (6) by means of two opposite signals; said integrated electronic components (S1) and (S2) are either of the discrete output or of the continuous output type, said permanent magnet (6) having a tubular shape, with a magnetic axis perpendicular to the direction of translation of the spool (3), **characterized in that** said permanent magnet (6) is interposed between the end of the spool (3) and that of a pin (5) that moves integrally with the spool (3) thanks to a threaded end thereof that is screwed onto the spool (3); the opposite end of said pin (5) is biased by a spring (11) that is adapted to bring the permanent magnet (6) back in line with the sensor body (8).

2. A hydraulic control valve as claimed in claim 1, **characterized in that** the dual output signal from the integrated electronic components (S1) and (S2) allows the sensor integrity to be checked.

3. A hydraulic control valve as claimed in claim 1, **characterized in that** when said integrated electronic components (S1) and (S2) are of the discrete output type, they provide a discrete voltage output signal that can provide information about the three states of the hydraulic control valve, i.e. "central position", "actuated towards the right", "actuated towards the left".

4. A hydraulic control valve as claimed in claim 1, **characterized in that** when said integrated electronic components (S1) and (S2) are of the continuous output type, they provide a continuous voltage output signal, varying proportional to the whole stroke of the permanent magnet (6).

5. A hydraulic control valve as claimed in claim 1, **characterized in that**, when the two output signals from the integrated electronic components (S1) and (S2) are equivalent, the permanent magnet (6) and hence the spool (3) are in the mechanical zero condition.

6. A hydraulic control valve as claimed in claim 1, **characterized in that** the sensor body (8) has a power and protection system integrated therein, having a diode (D1) for protecting the transducer (T) from polarity reversals and a varistor (V1) for protecting the transducer (T) from current and power peaks.

7. A hydraulic control valve as claimed in claim 1, **characterized in that** the sensor body (8) has slots (15a, 15b) for mounting it to the hollow flange (4) attached to the control valve body (1) at the opening of the bore (2) using only two screws (9) and for adjusting the sensor body (8) position until the median position of the permanent magnet (6), also known as mechanical zero.

8. A hydraulic control valve as claimed in claims 1 and 3, **characterized in that** the stroke transducer (T) allows typical solenoid or small motor currents to be withstood.

9. A hydraulic control valve as claimed in claims 1 and 4, **characterized in that** the stroke transducer (T) provides a voltage output within a range from 0.5 to 4.5 V or a voltage output within a range from 25% to 75% of the power voltage or a digital output via a CAN-bus protocol.

## Patentansprüche

1. Hydraulisches Steuerventil, mindestens einen Körper umfassend, innerhalb dessen eine Bohrung (2) eine axial gleitende aufnimmt, und der einen Wandler (T) aufweist, der Mittel (6, 8) enthält, um die Position der besagten Spule (3) zu ermitteln, indem das magnetische Feld gelesen wird, das von einem damit integrierten Permanentmagneten (6) erzeugt wird, mittels eines Körpers (8) eines Sensors, der ein integriertes Leistungs-und Schutzsystem und zwei integrierte elektronische Komponenten (S1) und (S2) umfasst, die die Bewegung des Permanentmagneten (6) mittels zwei entgegengesetzten Signale erkennen können; wobei die besagten integrierten elektronischen Komponenten (S1) und (S2) entweder der diskreten oder der kontinuierlichen Ausgangsart sind, wobei das besagte Magnet (6) eine rohrförmige Gestalt mit einer magnetischen Achse aufweist, die rechtwinklig zur Bewegungsrichtung der Spule (3) ist, **dadurch gekennzeichnet, dass** das besagte Permanentmagnet (6) zwischen dem Ende der Spule (3) und dessen eines Zapfens (5) zwischengeschaltet ist, der sich integral mit der Spule (3) bewegt, mittels eines gewindeförmigen Ende derselben, die auf der Spule (3) aufgeschraubt wird; wobei das entgegengesetzte Ende des besagten Zapfens (5) von einer Feder (11) beaufschlagt wird, die so angepasst ist, um das Permanentmagnet in Linie mit dem Körper (8) des Sensors zurück zu bringen.

2. Hydraulisches Steuerventil nach Anspruch 1, **dadurch gekennzeichnet, dass** der duale Ausgangssignal von den integrierten elektronischen Komponenten (S1) und (S2) gestattet, die Integrität des Sensors zu überwachen.

3. Hydraulisches Steuerventil nach Anspruch 1, **dadurch gekennzeichnet, dass** wenn die besagten integrierten elektronischen Komponenten (S1) und (S2) der diskreter Ausgangsart sind, so stellen sie einen diskreten Ausgangssignal bereit, der Hinweise über den drei Zuständen des hydraulischen Steuerventils, d.h. "Mittellage", "nach rechts aktiviert", "nach links aktiviert", liefern kann.

4. Hydraulisches Steuerventil nach Anspruch 1, **dadurch gekennzeichnet, dass** wenn die besagten integrierten elektronischen Komponenten (S1) und (S2) von der kontinuierlichen Ausgangsart sind, so stellen sie eine kontinuierliche Ausgangsspannung beriet, die sich im Verhältnis zum gesamten Hub des Permanentmagnets (6) verändert.

5. Hydraulisches Steuerventil nach Anspruch 1, **dadurch gekennzeichnet, dass** wenn die zwei Ausgangssignale aus den integrierten elektronischen Komponenten (S1) und (S2) äquivalent sind, so befinden sich die Permanentmagnete (6) und dann die Spule in der mechanischen Null-Bedingung.

6. Hydraulisches Steuerventil nach Anspruch 1, **dadurch gekennzeichnet, dass** der Körper (8) des Sensors ein darin integriertes Leistungs-und Schutzsystem hat, das eine Diode (D1) enthält, um den Wandler (T) von Polaritätsumkehr zu schützen, und einen Varistor (V1), um den Wandler (T) von Strom-und Leistungsspitzen zu schützen.

7. Hydraulisches Steuerventil nach Anspruch 1, **dadurch gekennzeichnet, dass** der Körper (8) des Sensors Schlitze (15a, 15b) aufweist, um ihn auf dem hohlen Flansch (4) aufzubringen, der auf dem Körper (1) des Steuerventils bei der Öffnung der Bohrung (2) befestigt ist, mit dem Einsatz von nur zwei Schrauben (9) und um die Position des Körpers (8) des Sensors bis zur mittleren Position des Permanentmagnets (6) zu regeln, auch als mechanische Null-Position bekannt.

8. Hydraulisches Steuerventil nach Anspruch 1 und 3, **dadurch gekennzeichnet, dass** der Wandler (T) des Hubes gestattet, typische Ströme von Ventilen oder kleinen Motoren zu standhalten.

9. Hydraulisches Steuerventil nach Anspruch 1 und 4, **dadurch gekennzeichnet, dass** der Wandler (T) des Hubes eine Ausgangsspannung von 0,5 bis 4,5 V oder eine Ausgangsspannung von 25% bis 75% der Leistungsspannung oder einen digitalen Ausgang mittels eines CAN-bus Protokolls liefert.

## Revendications

1. Une soupape di contrôle hydraulique, comprenant au moins un corps (1) dans lequel un trou (2) reçoit une bobine (3) coulissante axiale et ayant un transducteur (T) de course comprenant des moyens (6, 8) pour relever la position de la dite bobine (3) en lisant le champs magnétique généré par un aimant permanent (6) intégré avec elle en utilisant un corps (8) de senseur comprenant un système intégré de puissance et protection et deux composants électroniques intégrés (S1) et (S2) qui peuvent relever le mouvement de l'aimant permanent (6) par deux signaux opposites ; lesdits composants électroniques intégrés (S1) et (S2) étant du type avec une sortie discrète ou une sortie continue, le dit aimant permanent (6) ayant une forme tubulaire, avec un axe magnétique perpendiculaire à la direction de translation de la bobine (3), **caractérisé en ce que** le dit aimant permanent (6) est interposé entre la fin de la bobine (3) et qu'un pivot (5) qui se déplace intégré avec la bobine (3) par une extrémité filetée de la même qui est vissée sur la bobine (3) ; l'extrémité opposite du dit pivot (5) étant sollicité par un ressort (11) qui est adapté pour retourner l'aimant permanent (6) en ligne avec le corps (8) du senseur.

2. Soupape de contrôle hydraulique selon la revendication 1, **caractérisée en ce que** le signal dual de sortie des composants électroniques intégrés (S1) et (S2) permet de contrôler l'intégrité du senseur.

3. Soupape de contrôle hydraulique selon la revendication 1, **caractérisée en ce que** quand lesdits composants électroniques intégrés (S1) et (s2) sont d'un type de sortie discret, ils fournissent un signal de sortie de tension discret qui peut fournir des renseignements sur les trois états de la soupape de contrôle hydraulique, soit « position centrale », « actionné vers la droite » « actionné vers la gauche ».

4. Soupape de contrôle hydraulique selon la revendication 1, **caractérisée en ce que** quand lesdits composants électroniques intégrés (S1) et (S2) sont du type avec une sortie continue, ils fournissent un signal de sortie de tension continu, qui varie en proportion avec l'entière course de l'aimant permanent (6).

5. Soupape de contrôle hydraulique selon la revendication 1, **caractérisée en ce que**, quand les deux signaux de sortie des composants électroniques intégrés (S1) et (S2) sont équivalent, l'aimant permanent (6) et par conséquent la bobine (3) se trouvent dans une condition mécanique de zéro.

6. Soupape de contrôle hydraulique selon la revendication 1, **caractérisée en ce que** le corps (8) du senseur a un système de puissance et protection intégré à son intérieur, ayant un diode (d1) pour protéger le transducteur (T) contre les inversions de polarité et un variateur (V1) pour protéger le transducteur (T) contre les courants et les puissances de crête.

7. Soupape de contrôle hydraulique selon la revendication 1, **caractérisée en ce que** le corps (8) du senseur a des fissures (15a, 15b) pour l'installer sur la bride creuse (4) attachée au corps (1) de la soupape de contrôle à l'ouverture du trou (2) en utilisant seulement deux vis (8) et pour régler le corps (8) du senseur en position jusqu'à la position médiane de l'aimant permanent (6), aussi connue comme le zéro mécanique.

8. Soupape de contrôle hydraulique selon les revendications 1 et 3, **caractérisée en ce que** le transducteur (T) de la course permet de résister aux courants typiques des solénoïdes ou des petits moteurs.

9. Soupape de contrôle hydraulique selon les revendications 1 et 4, **caractérisée en ce que** le transducteur (T) de la course fournit une sortie de tension comprise entre 0,5 et 4,5 V ou une sortie de tension comprise entre 25% et 75% de la tension de puissance ou une sortie digitale par un protocol d'un CAN-bus.
